# EUROPEAN PATENT APPLICATION

(11) **EP 1 400 429 A1**
(43) Date of publication of application: **24.03.2004**
(21) Application number: 03021231.0
(22) Date of filing: 18.09.2003
(51) Int. Cl.: B62D 1/04, B60K 41/00

(54) **Vehicular steering operation device and method of controlling vehicle speed using vehicular steering operation device**

(30) Priority: 18.09.2002 JP 2002271786; 18.09.2002 JP 2002271797; 18.09.2002 JP 2002271804
(71) Applicant: Calsonic Kansei Corporation, Tokyo 164-8602 (JP)
(72) Inventor: Ohno, Masato, Tokyo 164-8602 (JP)
(74) Representative: Grünecker, Kinkeldey, Stockmair & Schwanhäusser Anwaltssozietät

(57) **Abstract**

A vehicular steering operation device (10), which has a hub portion (11) mounted to a steering shaft and rim portions (12a, 12b) integrally formed with the hub portion (11) on an outer periphery thereof, includes accelerating operation members (21a, 21b) disposed on surfaces of the respective rim portions (12a, 12b) at surfaces thereof closer to a vehicle front for rocking or sliding movements in a fore and aft direction of a vehicle, to allow the accelerating operation member (21a, 21b) to be pulled in front of driver to perform accelerating operation. A method of controlling a vehicle speed using the vehicular steering operation device (10) whose structure includes a step of detecting displacement values of a pair of accelerating operation members (21a, 21b) respectively; a step of selecting one of the accelerating operation members (21a, 21b) which has less variation in displacement value within a given time interval; and a step of adjusting a throttle opening dependent upon an accelerator output value of a selected accelerating operation member to control a traveling speed.

## Description

### BACKGROUND OF THE INVENTION

### 1. Field of the Invention

The present invention relates to a vehicular steering operation device provided with a vehicle speed control means, such as acceleration levers, and a variety of switches such as winker switches or the like, and a control method for a vehicle speed for accelerating or decelerating a vehicle using the vehicular steering operation device.

### 2. Description of the Related Art

In related art, an accelerator pedal and a brake pedal for accelerating or decelerating a traveling speed of an automobile are located on a floor portion in the vicinity of a foot area of a driver, thereby permitting an accelerating operation to be executed with, for instance, a right foot.

Further, in recent years, development work has been undertaken to provide a technology in which an acceleration lever is disposed on a steering wheel to allow hand and fingers to perform acceleration and deceleration of a vehicle (for example, see Japanese Patent Provisional Publication No. 5-270410). In such a steering wheel, disposed on a hub formed inside a rim are an acceleration lever and a brake lever which are mounted for rotating capabilities. This arrangement allows the driver to rotate the lever with his/her thumb and forefinger while gripping the rim to enable accelerating and decelerating operations of the vehicle. In particular, by pushing the acceleration lever in a front area of the vehicle with a tip of the thumb to rotate the acceleration lever, the accelerating operation is executed.

However, when rotating the lever with the tip of the thumb or the forefinger while gripping the rim, a driver with short fingers has difficulty in reaching the acceleration lever with his/her fingers and, hence, it becomes necessary for the fingers to be forcibly stretched out or for the gripping position to be changed so as to allow the driver's fingers to reach the acceleration lever. Therefore, a driver with short fingers experiences a problem of difficulty in achieving an accelerating operation.

Further, for the driver, if the acceleration lever is pushed by the thumb while gripping the rim, it is hard to perform a delicate accelerating operation. Additionally, the movement to push the acceleration lever encounters a problem of the inability to perform this rapidly and faster than the pulling movement.

Furthermore, in this accelerating and decelerating operation device, since a fuel injection device is applied with a signal having a large value from among signals resulting from left and right accelerators, in a case where, for instance, left and right accelerator displacement values are different from one another, it is probable that acceleration not intended by the driver will occur, resulting in the occurrence of jerky movements in a vehicle behavior.

### SUMMARY OF THE INVENTION

It is therefore an object of the present invention to provide a vehicular steering Operation device that allows a delicate and rapid accelerating operation to be performed and enables even a driver with short fingers to favorably achieve acceleration maneuverability. Moreover, it is another object of the present invention to provide a method of controlling a vehicle speed using a vehicular steering device wherein, even in the case of an occurrence of an accelerating operation that is not intended by the driver, it is possible to suppress variation in the behavior of the vehicle traveling rapidly.

To achieve the above objects, one aspect of the present invention provides a vehicular steering operation device comprising a hub portion mounted to a steering shaft, a rim portion fixed to an outer periphery of the hub portion, and a vehicle speed control member operatively disposed on a surface of at least one of vehicle front sides of the hub portion and the rim portion.

According to the present invention, due to an arrangement in which the vehicle speed control member is located in close proximity to the hand and fingers by which the rim portion is gripped, even a driver with short fingers is enabled to easily achieve accelerating and decelerating operations of the vehicle speed without changing the position at which the rim portion is gripped.

Another aspect of the present invention takes the form in which the surface, closer to the vehicle front side, of the rim portion has a concave portion to accommodate the vehicle control member.

According to the above form, the vehicle speed control member is able to have an increased operating margin. That is, although the operation of the vehicle speed control member is performed within the operating margin resulting from a start of movement of the vehicle speed control member until the same is brought into abutting engagement with the rim portion, an ability of the concave portion to store the vehicle speed control member increases the operating margin by a value equal to a depth of the concave portion.

According to another aspect of the present invention, the vehicle speed control member includes an accelerating operation member disposed for a sliding capability in a fore and aft direction of a vehicle to allow the accelerating operation member to slide in the aft direction of the vehicle, thereby controlling a traveling speed of the vehicle.

According to the above condition, since the driver is enabled to pull the vehicle speed control member toward the driver (rearward of the vehicle) while gripping the rim portion, delicate accelerating control and decelerating control can be performed. Namely, when slightly decreasing the speed or when gradually using an engine brake for deceleration, a fine accelerating operation can be easily performed. Also, since the action to pull the vehicle speed control member toward the driver is enabled to be performed faster than an action to push the vehicle speed control member, a prompt accelerating operation can be incorporated.

Another aspect of the present invention further comprises an upper end support portion formed on the surface, closer to the vehicle front side, of the rim portion, and a lower end support portion formed on the surface, closer to the vehicle front side, of the rim portion in an area spaced from the upper end support portion wherein the accelerating operation member is disposed between the upper and lower end support portions for a sliding capability in a radial direction of the rim portion.

With this condition, even during periods when the driver tightly grips the rim portion, since the driver is enabled to allow his middle finger to rest on the lower support portion, especially during long distance driving, it becomes possible to suppress the fatigues of the driver's arms and hand and fingers to a minimal level and, in an urgent instant, a steering operation can be rapidly performed. Also, due to an ability to allow a particular finger such as the middle finger to be rested on the lower support portion, the position in which the rim portion is gripped by the driver is kept fixedly.

According to another aspect of the present invention, the vehicle speed control member includes an acceleration lever having an end portion pivotally supported to allow the acceleration lever to be pulled rearward in a vehicle, thereby controlling a traveling speed of the vehicle.

With this condition, due to an ability to allow the acceleration lever to be progressively pulled toward the driver and to be rocked, a fine accelerating operation can be easily performed.

According to another aspect of the present invention, the acceleration lever is disposed along an axis of the rim portion and has a substantially V-shaped configuration bent toward the vehicle front side.

With this condition, if the lower end of the acceleration lever is brought into abutting contact with the rear surface of the rim portion, a triangular gap is formed between the acceleration lever and the rim portion, resulting in no possibility of the driver's hand and fingers getting caught in the acceleration lever.

According to another aspect of the present invention, the acceleration lever is disposed along an axis of the rim portion and is of a gun-grip type.

With this condition, due to an ability to allow the acceleration lever to be progressively pulled toward the driver and to be rocked, a fine accelerating operation can be easily performed.

According to another aspect of the present invention, an operation switch is disposed on at least one of the hub portion and the rim portion at an area thereof to which, under a condition where the rim portion is gripped, a thumb can reach.

With this condition, the driver is able to quickly operate the operation switch using his/her thumb while allowing the driver to continue gripping the rim portion.

According to another aspect of the present invention, the operation switch includes at least a winker switch.

With this condition, due to an arrangement wherein, from among the operation switches, the winker switch with the highest frequency of usage is located in closest proximity to the thumb, a more favorable maneuverability can be obtained.

To achieve the above objects, the present invention provides a method of controlling a vehicle speed using a vehicular steering operation device, the method comprising the steps of detecting accelerator displacement values of a pair of vehicle speed control members located left and right of a steering operation device, respectively, selecting one, whose accelerator displacement value resulting for a given time interval has a less variation than that of the other, from the pair of vehicle speed control members, and adjusting a throttle opening in dependence upon an accelerator output value of the selected vehicle speed control member for controlling a traveling speed.

According to the present invention, since the vehicle speed is determined in dependence on a small operational displacement value from among the operational displacement values of the acceleration operating members disposed left and right in the steering operation device, rapid variation in the vehicle behavior can be suppressed. Accordingly, the driver is enabled to perform a reliable drive without anxiety.

To achieve the above objects, the present invention provides a method of controlling a vehicle speed using a vehicular steering operation device, the method comprising the steps of detecting operational displacement values of a pair of vehicle speed control members located left and right of a steering operation device, respectively; selecting one, which is previously selected, from the pair of vehicle speed control members; and adjusting a throttle opening in dependence upon an accelerator output value of the selected vehicle speed control member for controlling a traveling speed.

According to the present invention, if one of the acceleration operating members is previously operated, there will be no variation in vehicle speed from the operation of the other acceleration operating member, thereby permitting rapid variation in the vehicle behavior to be suppressed. Also, due to an ability for only one of the acceleration operating members to be operated at once, it becomes possible to enable the vehicle to travel while reducing the load exerted on the driver.

To achieve the above objects, the present invention provides a method of controlling a speed of a vehicle using a vehicular steering operation device by increasing a throttle opening through accelerating operation to increase a vehicle speed and braking a vehicle traveling through braking operation to decrease the vehicle speed, the method comprising when performing both the accelerating operation and the braking operation, closing the throttle valve and applying a brake to a traveling vehicle, thereby decreasing the vehicle speed.

According to the present invention, when executing braking operation under a circumstance in which an accelerating operation is being conducted, priority is given to a braking operation to cause the throttle to be closed, resulting in improvement in a braking capability of the vehicle.

To achieve the above objects, the present invention provides a method of controlling a vehicle speed using a vehicular steering operation device, the method comprising the steps of measuring a variant amount in an accelerator displacement value appearing for a given time interval, and adjusting a throttle opening, when the variant amount reaches a given value, in dependence upon another variant amount, which is less than the current variant amount of the accelerator displacement value

According to the present invention, based on the relationship between the operational displacement value of the acceleration operating member and the time interval in which the acceleration operating member is operated, rapid accelerating operation can be properly performed, thereby allowing rapid variation in the vehicle behavior to be suppressed.

According to an embodiment, when the variant amount exceeds the given value and the accelerator displacement value increases, the throttle opening is kept at a constant value.

With this condition, in the case of a rapid accelerating operation being performed that would not occur in normal operation, since the throttle opening is fixed to prevent rapid acceleration from being carried out, it becomes possible to perform reliable driving without anxiety.

### BRIEF DESCRIPTION OF THE DRAWINGS

FIG. 1 is a perspective view showing a vehicular steering operation device of a first embodiment according to the present invention.
FIG. 2 is a front view showing the vehicular steering operation device of the first embodiment according to the present invention.
FIG. 3 is an expanded view showing a vicinity of a winker switch of Fig. 2.
FIG 4 is an expanded view showing a vicinity of a winker switch of another type different in structure from that of Fig. 3.
FIG 5 is a cross sectional view of the vehicular steering operation device taken along line A-A of Fig. 2.
FIG. 6 is a cross sectional view of the vehicular steering operation device taken along line B-B of Fig. 2.
FIG. 7 is a left side view illustrating the vehicular steering operation device of the first embodiment according to the present invention.
FIG 8 is a rear view illustrating the vehicular steering operation device of the first embodiment according to the present invention.
FIG 9 is a right side view illustrating the vehicular steering operation device of the first embodiment according to the present invention.
FIG. 10 is a left side view illustrating a condition in where the vehicular steering operation device shown in FIG. 7 is gripped and accelerating operation is carried out.
FIG 11 is a perspective view showing a vehicular steering operation device of a second embodiment according to the present invention.
FIG 12 is a left side view illustrating the vehicular steering operation device of the second embodiment according to the present invention.
FIG 13 is a right side view illustrating the vehicular steering operation device of the second embodiment according to the present invention.
FIG 14 is a left side view illustrating a vehicular steering operation device adopting an acceleration lever of a type different from that of FIG. 12.
FIG. 15 is a right side view illustrating a vehicular steering operation device adopting an acceleration lever of a type different from that of FIG. 13.
FIG 16 is a left side view illustrating a condition in where the vehicular steering operation device shown in FIG. 12 is gripped and accelerating operation is carried out.
FIG. 17 is a left side view illustrating a condition in where the vehicular steering operation device shown in FIG. 14 is gripped and accelerating operation is carried out.
FIG 18 is a left side view illustrating a condition in where the vehicular steering operation device shown in FIG 14 is operated with the acceleration lever being pulled to the maximum limit.
FIG. 19 is a schematic view showing a circuitry of the first embodiment related to a method of controlling a vehicle speed using the vehicular steering operation device of the present invention.
FIG. 20 is a schematic view showing a circuitry of the second embodiment related to a method of controlling a vehicle speed using the vehicular steering operation device of the present invention.
FIG 21 is a schematic view showing a circuitry of the third embodiment related to a method of controlling a vehicle speed using the vehicular steering operation device of the present invention.
FIG 22 is a graph illustrating the correlation between an accelerator displacement value and an operating time interval, showing a fourth embodiment related to a method of controlling a vehicle speed using the vehicular steering operation device of the present invention.
FIG. 23 is a schematic view showing a circuitry of a fifth embodiment related to a method of controlling a vehicle speed using the vehicular steering operation device of the present invention.
FIG 24 is a schematic view showing a circuitry of a sixth embodiment related to a method of controlling a vehicle speed using the vehicular steering operation device of the present invention.
FIG. 25 is a schematic view showing a circuitry of a seventh embodiment related to a method of controlling a vehicle speed using the vehicular steering operation device of the present invention.
FIG. 26 is a schematic view showing a circuitry of an eighth embodiment related to a method of controlling a vehicle speed using the vehicular steering operation device of the present invention.
FIG 27 is a schematic view showing a circuitry of a ninth embodiment related to a method of controlling a vehicle speed using the vehicular steering operation device of the present invention.

### DETAILED DESCRIPTION OF THE PREFERRED EMBODIMENTS

Initially, reference will now be made in detail to two embodiments of a vehicular steering operation device of the present invention with reference to the accompanying drawings. Then, further reference will be made to nine embodiments of a method of controlling a vehicle speed using the vehicular steering operation device with reference to the accompanying drawings. Also, an X-axis is set in a direction that extends from a left portion of a hub section to a right portion thereof, and a Y-axis is set in a direction that extends from a rear portion of a vehicle to a front portion thereof, with the X-axis and the Y-axis crossing each other at right angles.

### (Vehicular Steering Operation Device)

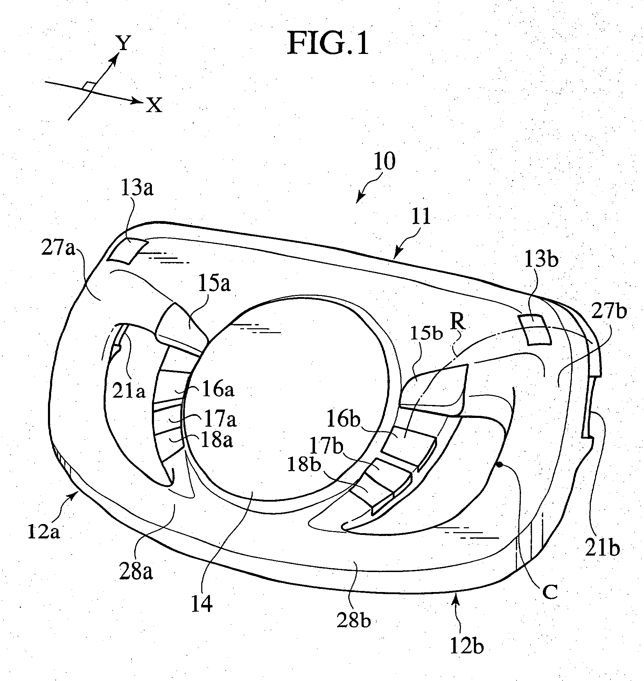

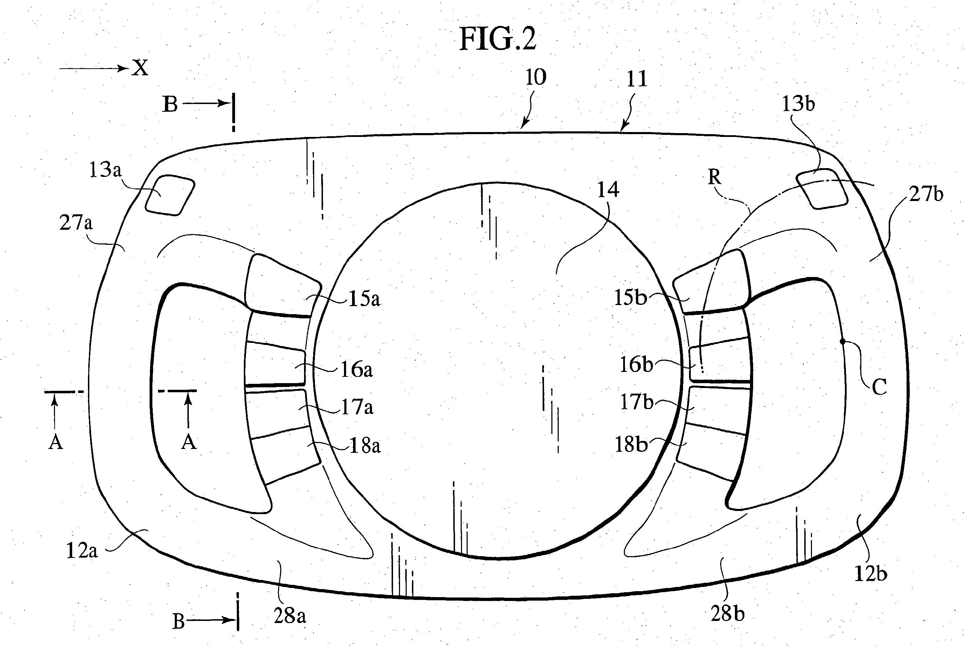

A description is made of a first embodiment related to a vehicular steering operation device. The steering operation device 10 is comprised of a hub portion 11 and rim portions 12a, 12b as viewed in FIGS. 1 and 2. The hub portion 11 is formed in a substantially T-shape in a plane and is operatively mounted to a rear terminal end of a steering shaft (not shown) extending in a fore and aft direction of the vehicle. The rim portions 12a, 12b are formed in substantially L-shapes respectively, and both the left and right ends of the hub portion 11 are connected to a lower end of the hub portion 11 by the rim portions 12a, 12b. This results in the integral formation of the rim portions 12a, 12b with the hub portion 11. Moreover, disposed on the hub portion 11 are various switches. Also, the present invention is based on a premise of providing a "small steering angle steering system" that enables the steering operation device 10 to be rotated leftward and rightward at angles of approximately 90° with respect to a neutral position while enabling steering to be achieved to the maximum steering angle without changing grip. Also, as shown in FIGS. 1 and 2, a single dot line R schematically indicates a movable range within which a thumb can be moved under a condition where the rim portion 12b of the steering operation device 10 is gripped. That is, a vicinity of a root portion of the thumb is represented by a black point C, and the movable range is based on a center at which the black point C lies.

Disposed at a center of the hub portion 11 is a circular center pad 14, in which an air bag (not shown) is internally stored. Disposed up and down along the left and right side areas of the center pad 14 are various, laterally elongated push-type switches. In particular, from the uppermost position, vehicle horn switches 15a, 15b, wiper switches 16a, 16b, head light switches 17a, 17b and interior light switches 18a, 18b are juxtaposed in order on the left and right sides, respectively.

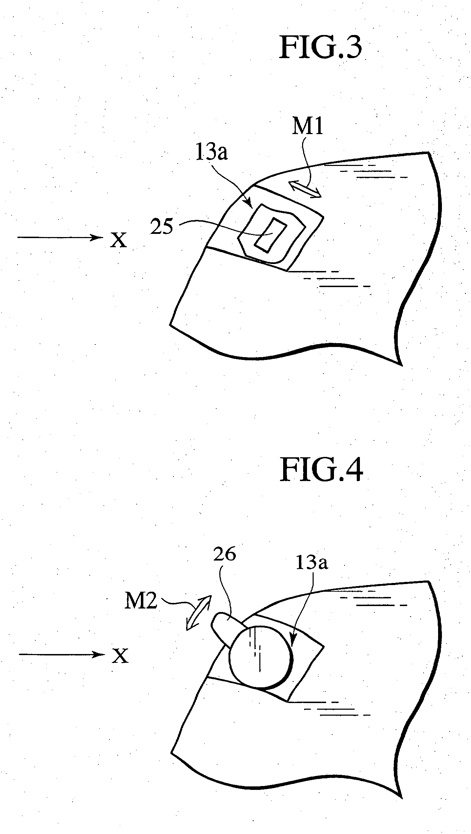

Disposed at upper end portions on the left and right side ends of the hub portion 11 are a pair of left and right winker switches 13a, 13b, which are constructed such that, under a condition where the rim portions 12a, 12b are gripped, the winker switches 13a, 13b are enabled to be manipulated by the thumbs. As viewed in FIG. 3, the winker switch 13a may have a rectangular shaped claw segment 25, which is slidable (or rockable) in left and right directions as shown by an arrow M1. Similarly, the winker switch 13b has a rectangular shaped claw segment which is also rendered slidable (or rockable) in left and right directions. Operations of these winker switches 13a, 13b are described. When sliding the switch 13a disposed on the left side (at the side -X) of the hub portion 11, a winker on a left side of the vehicle is lighted on. When sliding the switch 13b disposed on the right side (at the side +X) of the hub portion 11, a winker on a right side of the vehicle is lighted on.

Further, as shown in FIG 4, the winker switch 13a may have a tab segment 26, in place of the claw segment 25, that protrudes leftward (at the side -X) of the hub portion 11 and is pivotally movable up and down as shown by an arrow M2. Likewise, the winker switch 13b also has a tab segment that is pivotally movable up and down. Operations of these winker switches 13a, 13b are described. When pivotally moving the winker switch 13a disposed on the left side (at the side -X) of the hub portion 11, the winker on the left side of the vehicle is lighted on. Likewise, when pivotally moving the winker switch 13b disposed on the right side (at the side +X) of the hub portion 11, the winker on the right side of the vehicle is lighted on.

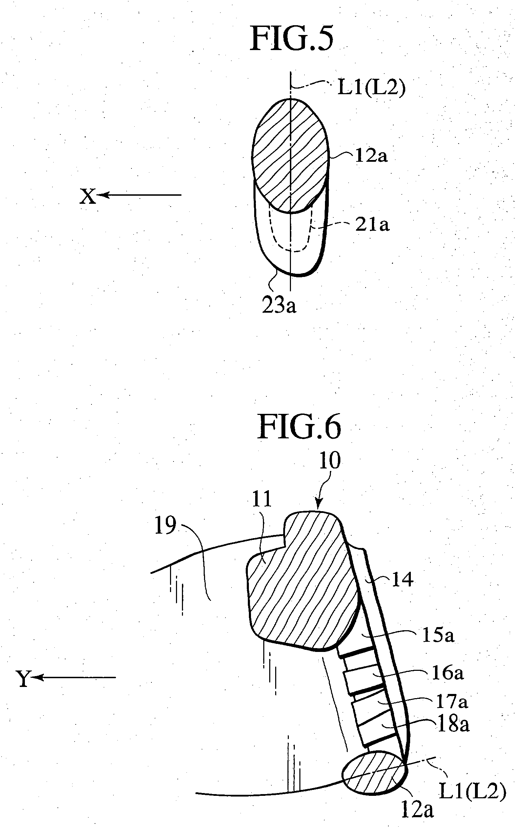

The rim portions 12a, 12b include substantially L-shaped columnar members which are formed to lie in left and right symmetry on a plane as shown in FIG 2, and upper end portions 27a, 27b of the hub portion 11 and lower end portions 28a, 28b of the hub portion 11 are interconnected through the rim portions 12a, 12b. As shown in FIG. 5, the rim portion 12a has an elliptical shape in cross section taken on line A-A in FIG. 2, with a longitudinal axis L1 of the ellipse extending along a steering column 19 mounted at a front portion of the steering operation device 10. Also, as shown in FIG. 6, the steering column 19 is disposed toward the front portion of the vehicle so as to be slightly inclined downward with respect to an axis Y. The steering operation device 10 is mounted such that a lateral direction (the axis X) of the hub portion 1 intersects a longitudinal axis of the steering column 19 at right angles.

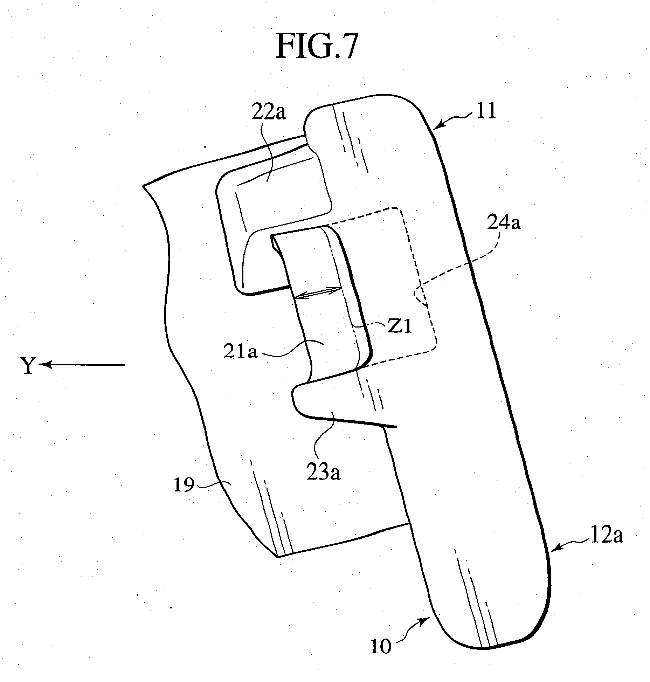

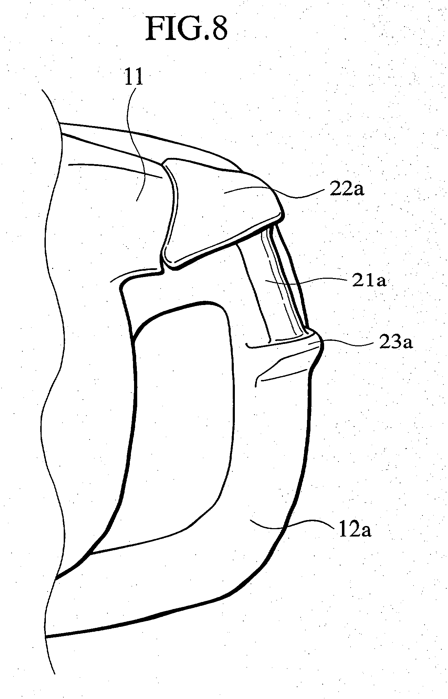

Further, as shown in FIGS. 7 and 8, disposed on a front side of the upper end portion of the rim portion 12a, i.e., on a rear side thereof as viewed from a driver, at an outside (at the side -X) area along an axis of the rim portion 12a is a longitudinally extending planar shaped, accelerating operation member 21a that is constructed for sliding movements along a radial direction of the rim portion 12a. The accelerating operation member 21a has an elliptical shape in cross section as viewed from an upper area of the rim portion 12a as shown by a dotted line in FIG 5, with a longitudinal axis L2 of the ellipse lying substantially aligned with the longitudinal axis L1 of the ellipse, in cross section, of the rim portion 12a. In addition, formed on the front area of the rim portion 12a are an upper end support portion 22a and a lower end support portion 23a that protrude forward (in the radial direction of the rim portion 12a) at vertically spaced positions. The accelerating operation member 21a is disposed between the upper and lower end support members 22a, 23a for sliding movements along the radial direction of the rim portion 12a. Also, in FIG. 7, a solid line indicates a non-loaded status with the accelerating operation member 21a remaining in an inoperative position. In contrast, a double-dotted line Z1 indicates a position in which the accelerating operation member 21a is moved to the maximum limit. Also, formed at a rear side of the rim portion 12a is a concave portion 24a that is shown as a broken line. The concave portion 24a is formed so as to have sufficient size to accommodate the accelerating operation member 21a when it is pulled to the maximum limit toward the driver (in the rearward direction).

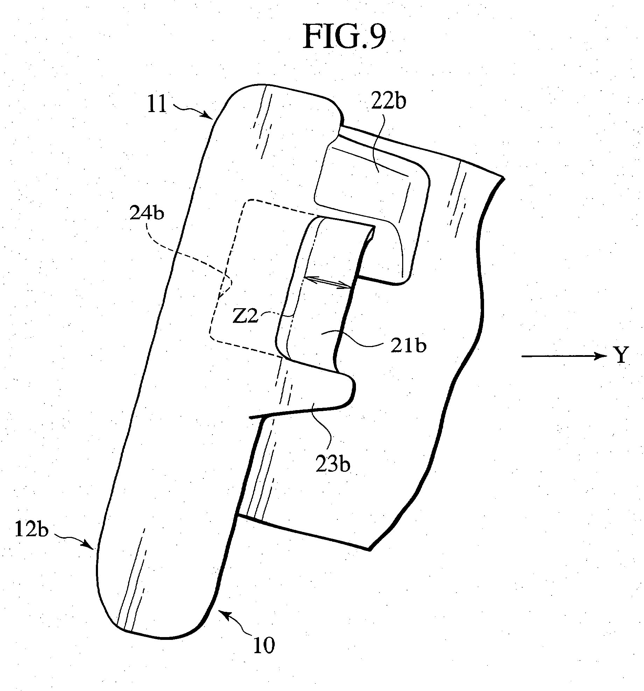

Similarly, as shown in FIG 9, disposed on a front side of the upper end portion of the rim portion 12b, e.g., on a rear side thereof as viewed from the driver, at an outside (at the side +X) area along an axis of the rim portion 12b is a longitudinally extending planar shaped, accelerating operation member 21b that is constructed for sliding movements along a radial direction of the rim portion 12b. The accelerating operation member 21b has an elliptical shape in cross section as viewed from an upper area of the rim portion 12b, with a longitudinal axis of the ellipse lying substantially aligned with the longitudinal axis of the ellipse, in cross section, of the rim portion 12b. In addition, formed on the front area of the rim portion 12b are an upper end support portion 22b and a lower end support portion 23b that protrude forward (in the radial direction of the rim portion 12b) at vertically spaced positions. The accelerating operation member 21b is disposed between the upper and lower end support members 22b, 23b for sliding movements along the radial direction of the rim portion 12b. Also, in FIG. 9, a solid line indicates a non-loaded status with the accelerating operation member 21b remaining in an inoperative position. A double-dotted line Z2 indicates a position in which the accelerating operation member 21b is moved to the maximum limit. Also, formed at a rear side of the rim portion 12b is a concave portion 24b that is shown as a broken line. The concave portion 24b is formed so as to have sufficient size to accommodate the accelerating operation member 21 when it is moved to the maximum limit toward the driver (in the rearward direction).

Next, a description is made of the operating sequences of the accelerating operation members 21a, 21b disposed in the vehicular steering operation device 10. Hereinafter, although explanation is made in conjunction with the accelerating operation member 21a as one example, the accelerating operation member 21b has a similar operating sequence.

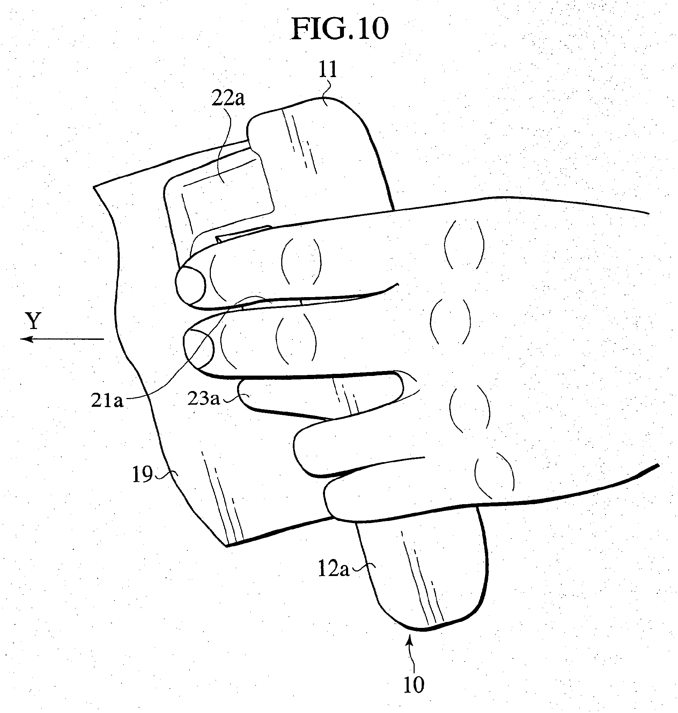

When performing accelerating operation using the accelerating operation member 21a, in normal practice, the accelerating operation members 21a is pulled rearward with a forefinger and a middle finger. That is, as shown in FIG. 10, with the rim portion 12a remaining in a condition gripped by the thumb, the ring finger and the little finger, a front face of the accelerating operation members 21a is gripped by a first joint of the forefinger and a second joint of the middle finger and, under such a gripped condition, the accelerating operation members 21a is progressively pulled toward the driver (rearward).

When operating the winker 13a, the thumb can be extended upward to a position to cause the winker switch 13a to slide leftward and rightward or to pivot up and down (see FIGS. 3 and 4) while gripping the rim portion 12a. Also, operations of the vehicle horn 15a, the wiper 16a, the headlight 17a and the interior light 18a can be executed by pressing the various switches with the thumb while gripping the rim portion 12a.

As set forth above, with the vehicular steering operation device 10, since the accelerating operation members 21a, 21b of sliding types able to be received in the rim portions 12a, 12b are adopted, no gaps are present between the accelerating operation members 21a, 21b and the rim portions 12a, 12b. Therefore, when in performance of accelerating operation while gripping the rim portions 12a, 12b, no problem results in a need for a double cross-over grip. Also, when gripping the accelerating operation members 21a, 21b deeply to their operational limits, the accelerating operation members 21a, 21b are substantially and completely accommodated in the rim portions 12a, 12b, and the driver may substantially have the same feeling as that attained when the rim portions 12a, 12b per se are gripped. When, as practiced in the related art, an acceleration lever of a pivotally movable type is used, due to variation taking place in momentum depending on a distance between a pivot axis and the associated manipulating finger, differing feelings in terms of an operability result in depending upon the positioning of the fingers. However, through the use of structures of the fore and aft sliding types like the accelerating operation members 21a, 21b, the driver may have the same feeling in arbitrary positions of the accelerating operation members 21a, 21b with no occurrence of difference in operability caused by the sizes of the hand and fingers. Additionally, due to the provision of lower end supports 23a, 23b formed on the lower portions of the rim portions 12a, 12b at the rear sides thereof, the middle fingers can be rested on the lower end support portions 23a, 23b even in the midst of the accelerating operation members 21a, 21b being gripped. Therefore, especially during long distance driving, prospective fatigues experienced on arms and the hand and fingers of the driver can be alleviated to a minimal level and, further in urgent cases, it becomes possible for steering operation to be rapidly performed. In addition, by allowing particular fingers, such as the middle fingers, to rest on the lower end support portions 23a, 23b, the gripping positions of the rim portions 12a, 12b can be fixedly retained.

Next, an explanation is made of a second embodiment related to a vehicular steering operation device. Also, the description of the same structure as that of the steering operation device 10 described above is herein omitted.

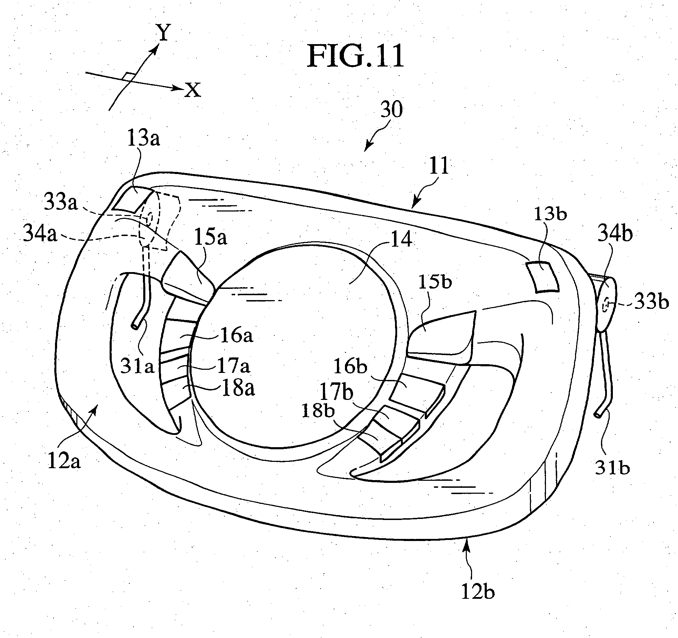

As shown in FIG. 11, a steering operation device 30 has the same structure as the steering operation device 10 except for acceleration levers 31a, 31b, serving as accelerating operation members, respectively, and covers 34a, 34b. That is, the steering operation device 30 is comprised of a hub portion 11 connected to the steering shaft that is not shown, rim portions 12a, 12b integrally formed with the hub portion 11 and various switches disposed on the hub portion 11.

The acceleration levers 31a, 31b are pivotally movably mounted to rear sides (at a side +Y) on the left and right terminal ends of an upper end of the hub portion 11. Pivot shaft segments 33a, 33b are fixed to the hub portion 11 at areas, in compliance with portions extended from the rim portions 12a, 12b along the axes thereof, which are positioned along an outer circumferential edge of the vehicular steering operation device 10.

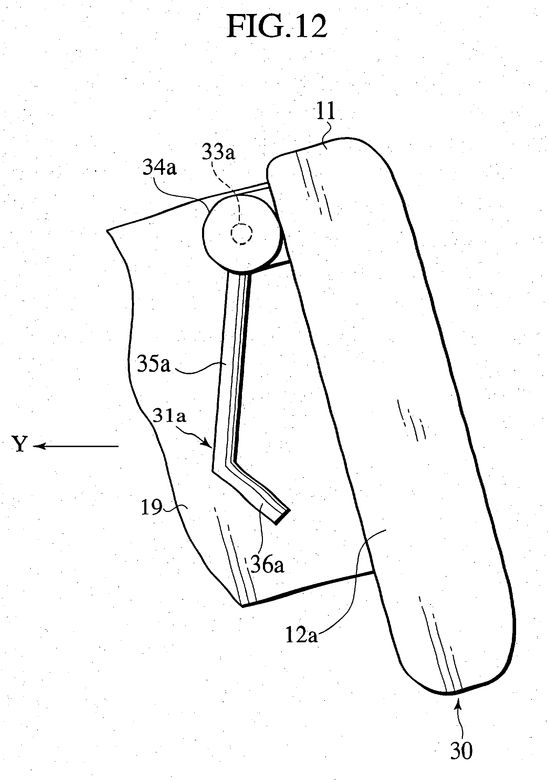

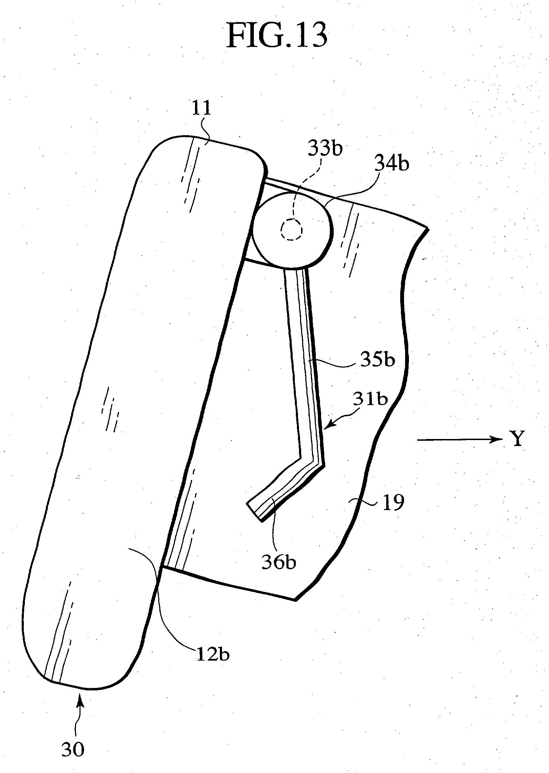

As shown in FIGS. 12 and 13, the pivot shaft segments 33a, 33b are covered with the covers 34a, 34b formed in cylindrical shapes, respectively. Lower portions of the covers 34a, 34b are formed with openings (not shown), respectively, thereby allowing the acceleration levers 31a, 31b to be pivotally movable in fore and aft directions inside the openings. Mounted inside the covers 34a, 34b are potentiometers (not shown). In the respective potentiometers, rotational angles of the acceleration levers 31a, 31b are electrically converted into electric signals which are employed in order to adjust throttle openings.

The acceleration levers 31a, 31b are formed of lever body portions 35a, 35b linearly and obliquely extending forward, and bent lever portions 36a, 36b, bent at lower ends of the lever body portions 35a, 35b and obliquely extending rearward, which are integrally formed with the lever body portions 35a, 35b, respectively, to be formed in approximately V-shapes, respectively, as viewed from a side. Also, the acceleration levers 31a, 31b are urged in the forward direction with urging means (not-shown), such as springs, whereby even when the acceleration levers 31a, 31b are released, the acceleration levers 31a, 31b are kept in the forward positions (in the direction +Y).

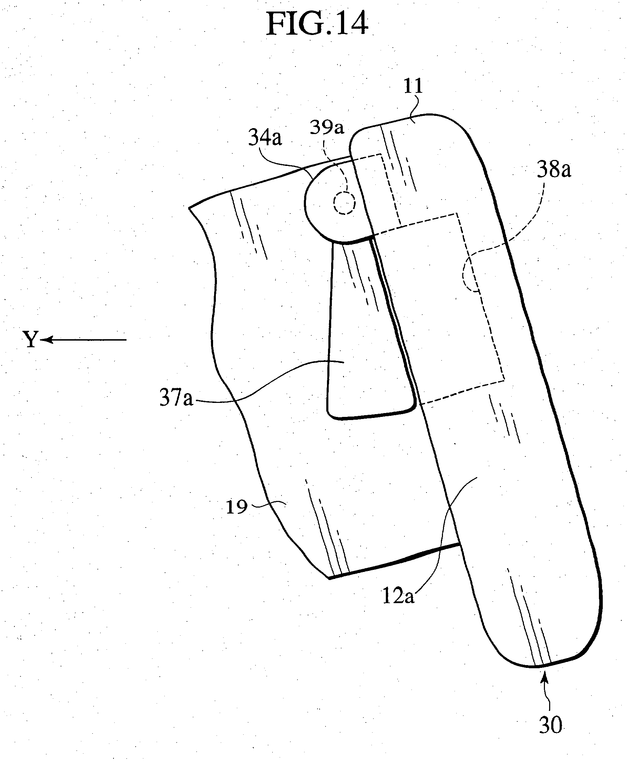

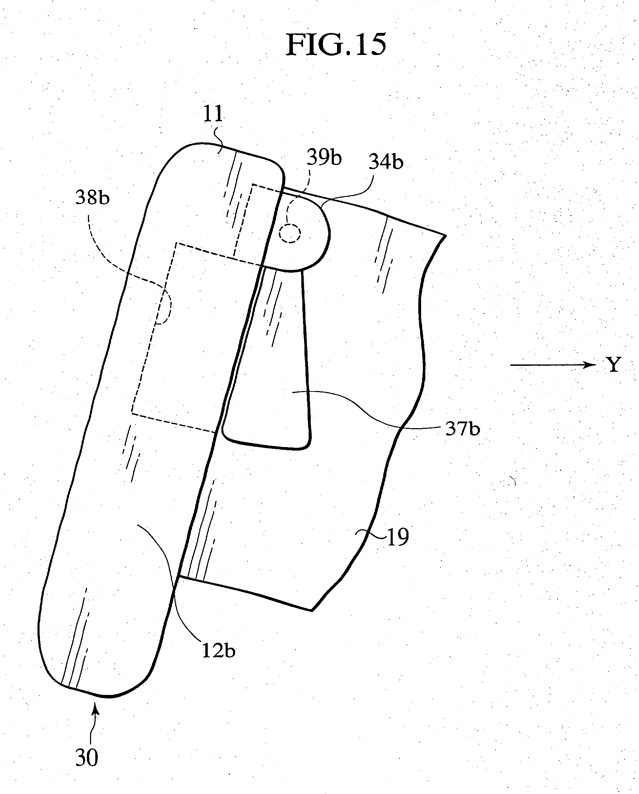

Moreover, as shown in FIGS. 14 and 15, the acceleration levers 31a, 31b may take the forms of acceleration levers 37a, 37b of gun-grip types of which structures are employed in electric power tools such as drills. The acceleration levers 37a, 37b are mounted to rear sides (at the side +Y) of left and right end portions of the upper end of the hub portion 11 to be pivotally movable via pivot shaft segments 39a, 39b mounted at the upper end portions of the acceleration levers 37a, 37b. Under non-loaded conditions in inoperative statuses, almost no gaps are formed between the acceleration levers 37a, 37b and the rim portions 12a, 12b with no probability of the hand and fingers becoming caught. In addition, formed at the rear sides of the rim portions 12a, 12b in opposition to the acceleration levers 37a, 37b are concave portions 38a, 38b in which the acceleration levers 37a, 37b are accommodated. Also, the acceleration levers 31a, 31b and the acceleration levers 37a, 37b are disposed along the axial directions of the rim portions 12a, 12b.

Next, an explanation is made of the operating sequences of the acceleration levers 31a, 31b and the acceleration levers 37a, 37b disposed in the vehicular steering operation device 30. Hereinafter, although an explanation is made in reference to the operating sequences of the acceleration levers 31a, 37a as examples, the acceleration levers 31b, 37b are also operated in similar sequences.

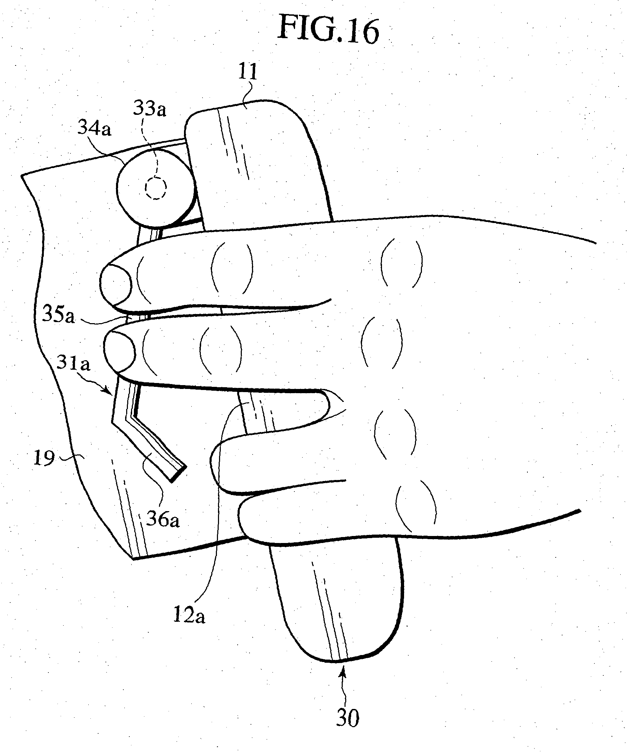

With the steering operation device 30 shown in FIG. 12, as shown in FIG 16, the rim portion 12a is gripped with the thumb, the ring finger and the little finger and, under such a condition, the forefinger and the middle finger are engaged with a central area of the lever body portion 35a of the acceleration lever 31a which in turn is pulled rearward (toward the driver). Upon such operation, if the lower end of the lever bending portion 36a of the acceleration lever 31a is brought into abutting engagement with the rear side of the rim portion 12a, a triangular gap is defined between the acceleration lever 31a and the rim portion 12a and there is no probability of the hand and fingers becoming trapped by the acceleration lever 31a.

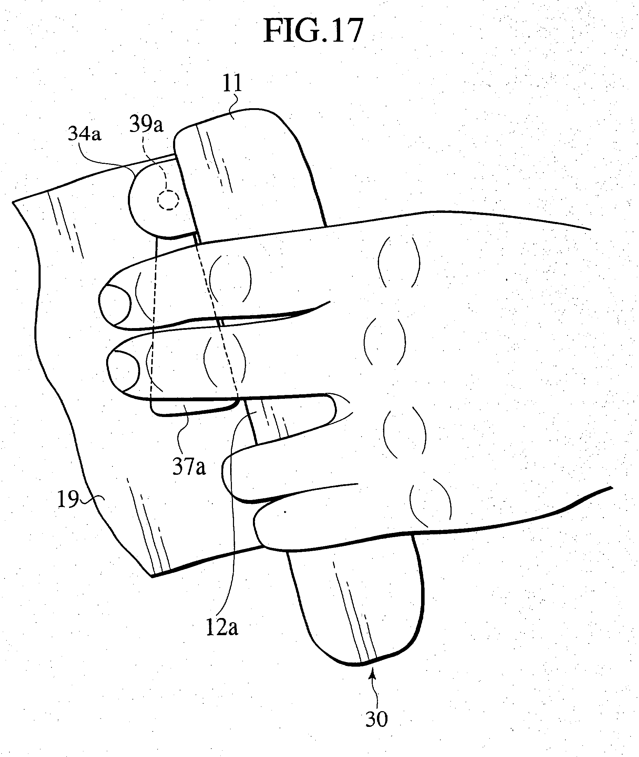

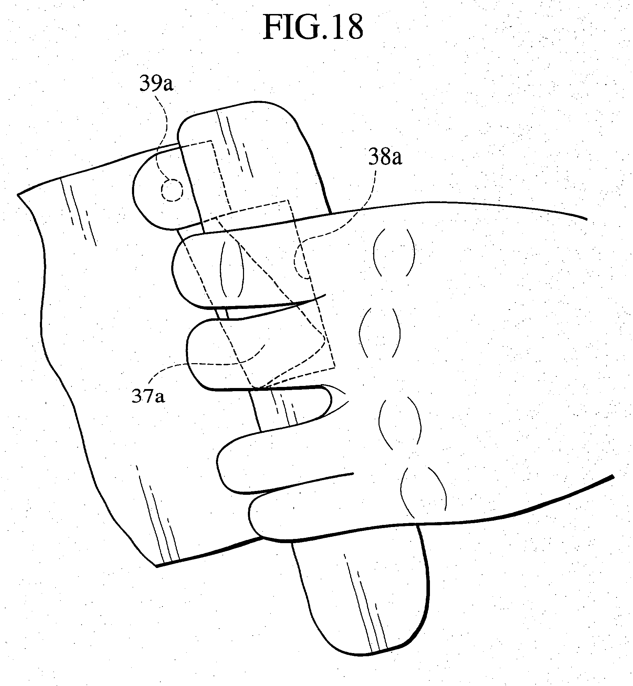

Next, with the steering operation device 30 shown in FIG. 14, as shown in FIG. 17, the rim portion 12a is gripped with the thumb, the ring finger and the little finger and, under such a condition, the forefinger and the middle finger are engaged with a lower portion of the acceleration lever 37a which in turn is pulled rearward (toward the driver). Upon such operation, the acceleration lever 37a is pivotally moved about a center of the pivot shaft segment 39a and is accommodated in the concave portion 38a as shown in FIG. 18.

As set forth above, due to an arrangement of the acceleration levers 37a, 37b adapted so as to be accommodated in the concave portions 38a, 38b, the acceleration levers 37a, 37b may have increased operating margins. That is, if, in the absence of the concave portions 38a, 38b, the acceleration levers 37a, 37b are pulled, the only operating margins can be provided correspond to the distance in which the acceleration levers 37a, 37b can be brought into abutting engagement with the rear sides of the rim portions 12a, 12b, respectively, but the provision of the concave portions 38a, 38b allows the operating margins to be enlarged.

Further, through the operation of the driver of pulling the acceleration levers 31a, 31b or the acceleration levers 37a, 37b toward his/her front, it becomes possible for the driver to achieve a fine accelerating operation in a relatively easy fashion. In the related art, movements to push the acceleration levers 31a, 31b or the acceleration levers 37a, 37b forward make it difficult to perform delicate acceleration control. In the present invention, movements to pull the acceleration levers 31a, 31b or the acceleration levers 37a, 37b toward the driver, allow a delicate accelerating operation to be easily and reliably realized.

Further, regardless of the sizes of the hand and fingers of the driver, accelerating operation can be carried out. Especially, the acceleration levers 37a, 37b take the forms that enable manipulations with a single or two fingers, in structures with no personal difference to grip the acceleration levers 37a, 37b without causing a problem to occur in that fingers are trapped. Also, since there is no need for a driver's grip on the steering operation device 30 to be changed even when the acceleration levers 31a, 31b or the acceleration levers 37a, 37b remain unused, no possibility occurs in that the driver is subjected to stress.

While the vehicular steering operation device embodying the present invention has been described in conjunction with the two embodiments in terms of exemplary cases, the present invention is not limited to these embodiments and various forms of embodiments may be adopted without departing from the scope and spirit of the present invention. For instance, as the accelerating operation member, operation members of a lever type, a sliding type, a pivoting type and a push type may be widely used.

### (Control Method For Vehicle Speed Using Vehicular Steering Operation Device)

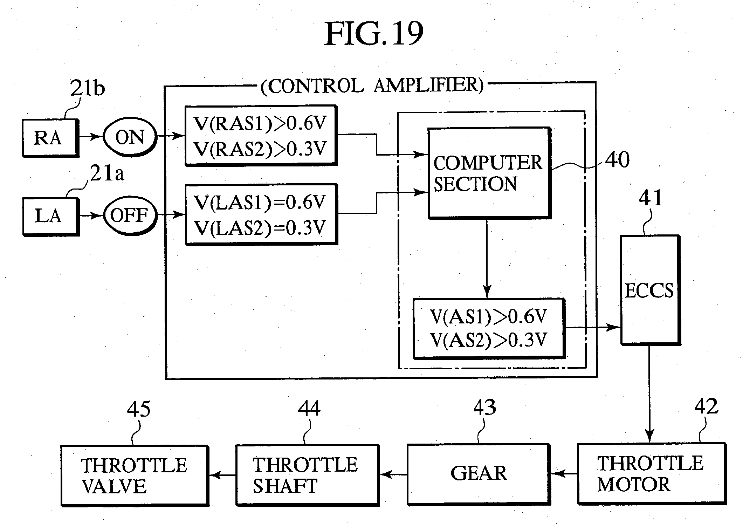

Initially, an explanation is made of a first embodiment related to a control method for a vehicle speed using the vehicular steering operation device. In respect of the first embodiment, referring to FIG. 19, a description is made of the method of controlling the vehicle speed in a mode of single operation using the accelerating operation member 21b. Also, the present invention may take the same control method even in case of using the accelerating operation member 21a.

In FIG 19, LA designates the accelerating operation member 21a disposed on the rim portion 12a located at the left side of the steering operation device 10 and, further, RA designates the accelerating operation member 21b disposed on the rim portion 12b located at the right side of the steering operation device 10. Mounted on the accelerating operation members 21a, 21b, respectively, are two systems of angle sensors, for instance, potentiometers. Provided on the accelerating operation member 21a are two angle sensors (LAS1, LAS2), and two angle sensors (RAS1, RAS2) are provided on the accelerating operation member 21b. Each angle sensor is applied with a fixed voltage and a resistance value created in each sensor varies depending on a throttle opening, with an output voltage depending on this resistance value being outputted to a computer section 40.

Further, since the angle sensors have identical resistance values, the resistance values resulting from the accelerator openings take the same values that are mutually and approximately equal to one another. First sensors composed of the sensors LAS1 and RAS1 are applied with a voltage of 5V, and second sensors composed of the sensors LAS2 and RAS2 are applied with a voltage of 2.5V.

Output voltages resulting from the sensors LAS1 and RAS1 lie at 0.6V under an idling condition while lying at 4.2V when in an upper limit of the accelerator opening and, thus, linearly vary depending upon the accelerator opening. Moreover, output voltages resulting from the sensors LAS2 and RAS2 lie at 0.3V under the idling condition while lying at 2.1V when in the upper limit of the accelerator opening and, thus, linearly vary depending upon the accelerator opening. Accordingly, the voltages outputted from the first sensors vary within ranges of 0.6≦V(RAS1), V(LAS1)≦4.2V, and the voltages outputted from the second sensors vary in a range of 0.3V≦V(RAS2), V(LAS2)≦2.1V.

Turning to FIG 19, an explanation is made of another mode wherein only the accelerating operation member 21b is operated. When in operative condition of the accelerating operation member 21b, the voltages V(RAS1) and V(RAS2) outputted from the sensors RAS1, RAS2 take values in ranges of 0.6V<V(RAS1)≦4.2V, 0.3V <V(RAS2)≦ 2.1V, respectively. With the accelerating operation member 21a remaining in an inoperative condition, the voltages V(LAS1) and V(LAS2) outputted from the sensors LAS1, LAS2 take values of V(LAS1) = 0.6V and V(LAS2) = 0.3V, respectively. All of these voltage values are inputted to the computer section 40. When in operation of the computer section 40 to retrieve the voltage values of V(LAS1) = 0.6V, V(LAS2) = 0.3V, discrimination is made that the accelerating operation member 21a remains inoperative whereas only the accelerating operation member 21b remains operative, and the voltage values of V(RAS1) and V(RAS2) are outputted to an electronic concentrated control system (hereinafter termed "ECCS") 41 as the output voltages V(AS1) and V(AS2), respectively. Upon receipt of these voltage values, the ECCS 41 operates to drive a throttle motor 42, a gear 43 and a throttle shaft 44 to adjust a throttle valve 45 to obtain a desired throttle opening. Also, operations of these control amplifiers may be incorporated into an interior of the ECCS 41.

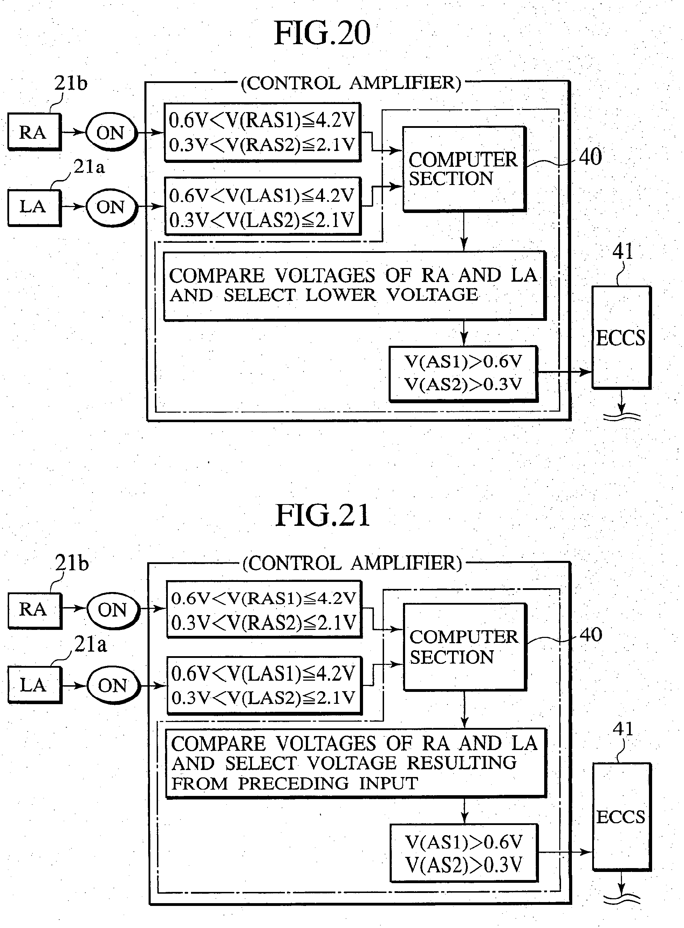

Secondly, an explanation is made of a second embodiment related to a method of controlling a vehicle speed using the vehicular steering operation device. In respect of the second embodiment, a description is made of the method of controlling the vehicle speed through both of accelerating operations using the accelerating operation members 21a, 21b with reference to FIG. 20. In particular, if the driver operates both the accelerating operation members 21a, 21b, the accelerating operation member, whose accelerator opening is less than the other, is selected such that the throttle opening is controlled.

In the presently filed embodiment, since the accelerating operation member 21a remains operative, the voltage values V(LAS1) and V(LAS2) resulting from the angle sensors LAS1, LAS2 take values ranges of 0.6V<V(LAS1)≦4.2V, 0.3V<V(LAS2) ≦2,1V. Similarly, since the accelerating operation member 21b remains operative, the voltage values V(RAS1) and V(RAS2) resulting from the angle sensors RAS1, RAS2 take values in ranges of 0.6V<V(RAS1)≦4.2V, 0.3V<V(RAS2)≦2.1V.

When these voltage values are applied to the computer section 40, the computer section 40 executes comparisons between the voltage values of LAS1 and RAS1 and between the voltage values of LAS2 and RAS2, respectively. Here, suppose that the accelerator opening of the accelerating operation member 21b is less than that of the accelerating operation member 21a, this status is expressed by V(RAS1)<V(LAS1) and V(RAS2)<V(LAS2). Upon execution of these comparisons, the computer section 40 makes discrimination that the accelerator opening of the accelerating operation member 21b is less than that of the accelerating operation member 21a, and outputs the voltage values of V(RAS1) and V(RAS2) to the ECCS 41 as the output voltages V(AS1) and V(AS2). The subsequent flow of operations is identical to the content that has been already described above in conjunction with FIG. 19.

As set forth above, of the left and right accelerator openings, since the vehicle speed is determined in compliance with a particular value of the throttle opening that is less than the other, even when a slight amount of difference occurs as a result of accelerating operations simultaneously being performed left and right by the driver, no problem occurs in that the throttle opening becomes larger than that intended by the driver. Consequently, no accelerator displacement value is needed to be returned or no gear reduction operation, such as brake operation, is performed, enabling fluctuation in vehicle behavior to be suppressed.

Thirdly, an explanation is made of a third embodiment related to a method of controlling a vehicle speed using the vehicular steering operation device. In the third embodiment, a description is made of another method of controlling the vehicle speed through both accelerating operations using the accelerating operation members 21a, 21b with reference to FIG. 21. In particular, if the driver operates both the accelerating operation members 21a, 21b, the accelerating operation member that is operated faster than the other is selected, whereby the throttle opening is controlled.

In the presently filed embodiment, since the accelerating operation member 21a remains operative, the voltage values V(LAS1) and V(LAS2) outputted from the angle sensors LAS1, LAS2 take values in ranges of 0.6V < V(LAS1) ≦ 4.2V, 0.3V < V(LAS2) ≦ 2.1V. Similarly, since the accelerating operation member 21b remains operative, the voltage values V(RAS1) and V(RAS2) outputted from the angle sensors RAS1, RAS2 take the values in ranges of 0.6V<V(RAS1)≦4.2V, 0.3V<V(RAS2) ≦2.1V.

When these voltage values are applied to the computer section 40, the computer section 40 executes comparisons between the voltage values of LAS1 and RAS1 and between the voltage values of LAS2 and RAS2, respectively. When the accelerating operation member 21b is operated first, the voltage value resulting from RAS1 is inputted to the computer section 40 faster than the voltage value resulting from LAS1, and the voltage value resulting from RAS2 is inputted to the computer section 40 faster than the voltage value resulting from LAS2. Upon execution of these comparisons, the computer section 40 makes discrimination that the accelerating operation of the accelerating operation member 21b is faster than that of the accelerating operation member 21a, and outputs the voltage values of V(RAS1) and V(RAS2) to the ECCS 41 as the output voltages V(AS1) and V(AS2). The subsequent flow of operations is identical to the content that has been already described above in conjunction with FIG. 19.

As set forth above, of the accelerating operation members 21a, 21b, priority is given to the accelerator opening of the accelerating operation member that has been previously operated over the other, while permitting the accelerator opening of the other accelerating operation member that has been subsequently operated to be ignored, whereby even if both of the accelerating operation members are manipulated, only one of the accelerating operation members is enabled to achieve accelerating operation at all times.

Further, when the accelerating operation members 21a, 21b are released to allow both the accelerator openings to be brought into idle conditions, the priority comparing operation for the accelerating operation members is cancelled and reset. Consequently, during subsequent accelerating operation after release of the accelerating operation members 21a, 21b, the accelerator opening of the accelerating operation member that has been previously operated is selected, and the accelerator opening of the accelerating operation member that has been subsequently operated is ignored. For instance, if the accelerating operation member 21b is operated at a timing faster than the accelerating operation member 21a, the vehicle travels at a speed depending upon the accelerator opening of the accelerating operation member 21b. Then, if the accelerating operation member 21a is operated faster than the accelerating operation member 21b again after both the accelerating operations have been terminated, then the vehicle travels at the speed depending upon the accelerator opening of the accelerating operation member 21a.

Also, indicators may be mounted on the steering operation device 10 at areas in close proximity to the accelerating operation members 21a, 21b to provide the driver with information indicative of the accelerating operation member being currently selected. This provides a capability for the driver to know which of the accelerating operation member is selected even in a case where the accelerating operation members 21a, 21b are being simultaneously operated, thereby permitting the driver to quickly release the accelerating operation member that is not selected. This results in a capability for a single hand to achieve accelerating operation, enabling reduction in a load be exerted on the driver.

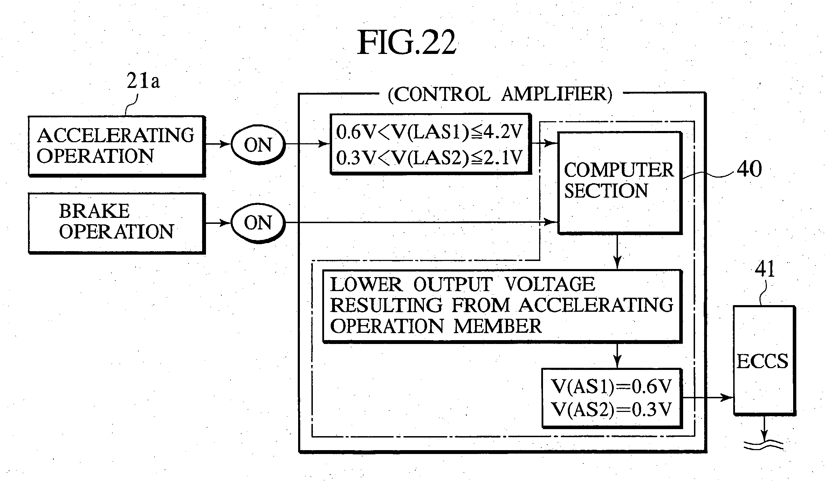

Fourthly, an explanation is made of a fourth embodiment related to a control method for a vehicle speed using the vehicular steering operation device. In the fourth embodiment, a description is made of the method of controlling the vehicle speed through accelerating operation and brake operation with reference to FIG. 22. In particular, if brake operation is executed during operation of the accelerating operation member 21a, the output voltage resulting from the accelerating operation member 21a is lowered to allow the accelerator opening to be closed. Also, even when using the accelerating operation member 21b, a similar control method is undertaken. Moreover, a description of the same content as that of the previous embodiment is herein omitted.

Applied to the computer section 40 are ON, OFF signals in addition to the output voltages V(LAS1), V(LAS2) delivered from the accelerating operation member 21a. With braking operation being turned ON for the purpose of closing the accelerator opening, the computer section 40 operates to decrease the output voltage of the accelerating operation member 21a such that the output voltages V(AS1), V(AS2) of the computer section 40 are converted to 0.6V and 0.3V respectively, which are in turn applied to the ECCS 41.

In the related art, switchover between accelerating operation and brake operation is executed through a change of a foot on the accelerator and the brake. However, in the present invention, the accelerating operation members 21a, 21b are mounted on the steering operation device 10, making it possible for the hand to achieve accelerating operation while simultaneously permitting the foot to achieve brake operation. That is, since accelerating operation and brake operation are simultaneously performed, a probability occurs in which not only fuel consumption decreases but also a braking distance is prolonged. Therefore, as described in connection with the presently filed embodiment, if the throttle opening is designed to be closed when brake operation is performed during accelerating operation, both fuel consumption and braking performance are improved.

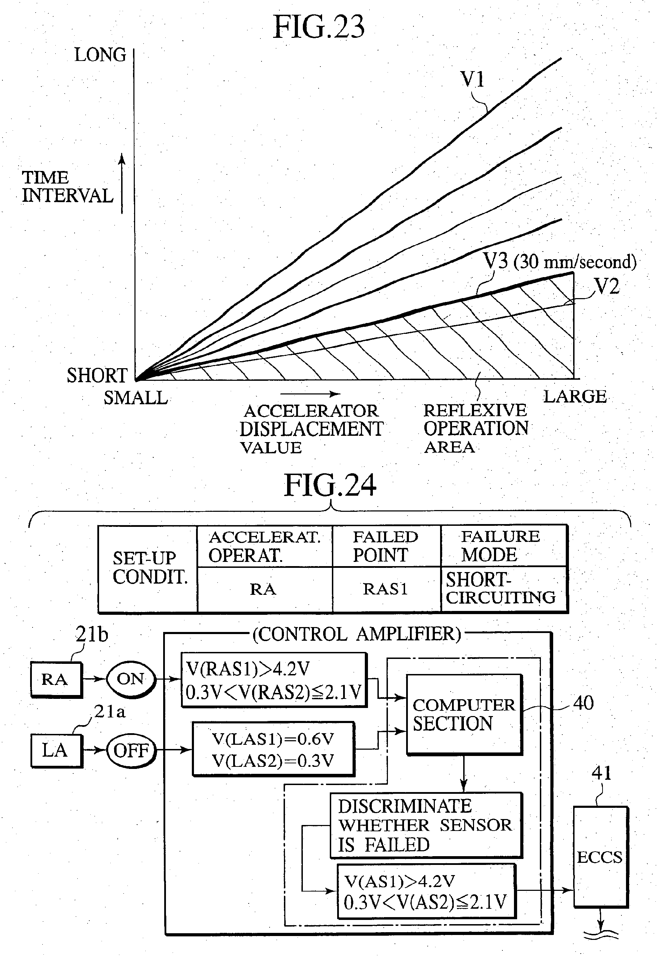

Fifthly, an explanation is made of a fifth embodiment related to a control method for a vehicle speed using the vehicular steering operation device. In the fifth embodiment, a description is made of the method of controlling the vehicle speed based upon an incremental accelerator displacement value per unit time with reference to FIG. 23.

FIG. 23 is a graph illustrating the correlation between an accelerator displacement value and an acceleration operating time interval. In FIG. 23, a graph sloped at a large incline angle, for instance V1, represents a condition under which an accelerating operation is slowly performed within an extended length of time. Also, a graph sloped at a small incline angle, for instance V2, represents a condition under which accelerating operation is quickly performed within a short period of time. Thus, the smaller the incline angle, the larger the accelerator displacement value will be within a given time interval. Moreover, V3 indicated by a large solid line designates an accelerator displacement value of 30 mm/second, and a larger range (a hatched area in FIG. 23) than such a value represents a reflexive operation area. Accelerating operation involved in the reflexive operation is judged not to be normal operation, and a control signal is transmitted to the ECCS 41 so as to perform a control such that the opening degrees of the throttle valve 45 are decreased to be lower than a resulting displacement value of the same. Especially, in an event that the accelerator displacement value is progressively increasing, the opening degree of the throttle valve 45 is kept fixedly.

Sixthly, an explanation is made of a sixth embodiment related to a control method for a vehicle speed using the vehicular steering operation device. In the sixth embodiment, a description is made of the method of controlling the vehicle speed in respect of a case where a failure occurs in the angle sensor (potentiometer) of one system in one of the accelerating operation members, with reference to FIG. 24. In particular, suppose a case in that, under a circumstance where the accelerating operation member 21a remains inoperative whereas the accelerating operation member 21b is operated, a failure occurs in RAS1 serving as the angle sensor of the one system in the accelerating operation member 21b, and that a failure mode includes short-circuiting.

Initially, an explanation is made of a fail-safe achieved in the related art electronically controlled accelerator pedal. The related art electronically controlled accelerator pedal is provided with an accelerator sensor with potentiometers in two systems. If a probability occurs in disconnection, short-circuiting, fixing (invariance in an output voltage resulting from invariance in a resistance value) or chattering in the potentiometers of the one system of the potentiometers of the two systems and outliers appear in the output voltages, the ECCS 41 applied with the abnormal voltages renders operative a meter or an indicator such as an engine warning lamp conspicuously disposed in a visible range of the driver, to be lighted up to provide the driver with information indicative of an abnormality. However, traveling per se is maintained based upon the output voltage resulting from the potentiometer of one system with no occurrence of the failure. But if an engine speed is nearing a vicinity of a value of 25,000 rpm, fuel is cut off. This causes the driver to have a bodily sensation indicative of an abnormality of some kind to prevent the driver from taking an action to perform rapid acceleration.

Next, another explanation is made of a fail-safe achieved by the accelerating operation member of the presently filed embodiment. Upon operation of the accelerating operation member 21b, the voltage value of RAS2 takes a value in ranges of 0.3V < V(RAS2) ≦ 2.1V. Since RAS1 is short-circuited, the output voltage V(RAS1) exceeds an upper limit of 4.2V. With the accelerating operation member 21a remaining inoperative, it is invariant that V(LAS1) = 0.6V and V(LAS2) = 0.3V The computer section 40 in the control amplifier retrieves V(LAS1) = 0.6V and V(LAS2) = 0.3V and discriminates that the accelerating operation member 21a remains inoperative whereas only the accelerating operation member 21b is operated, whereupon the voltage values of V(RAS1) and V(RAS2) are outputted to the ECCS 41 as the output voltages V(AS1) and V(AS2), respectively. Since the output voltage V(AS1) exceeds the upper limit value of 4.2V, the ECCS 41 applied with these voltage values discriminates the presence of the abnormality in the angle sensor while providing the driver with information of the abnormality using the engine warning lamp. However, the ECCS 41 retrieves the value of the output voltage V(AS2) with no abnormal value being exhibited and regulates the throttle opening to a value intended by the driver, thereby permitting traveling per se to be maintained. But, if the engine speed is nearing the vicinity of 25,000 rpm, fuel is cut off to avoid the vehicle from being rapidly accelerated.

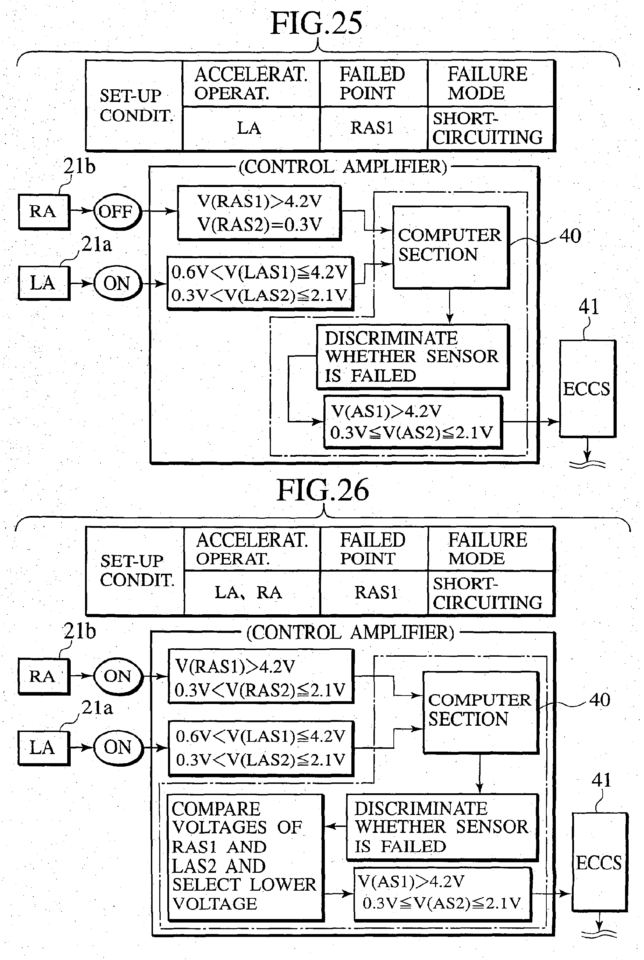

Seventhly, an explanation is made of a seventh embodiment related to a control method for a vehicle speed using the vehicular steering operation device. In the seventh embodiment, a description is made of the method of controlling the vehicle speed, in a case where a failure occurs in the angle sensor (potentiometer) of one system in the other one of the accelerating operation members, with reference to FIG. 25. In particular, suppose a case in that, under a circumstance where the accelerating operation member 21b remains inoperative whereas the accelerating operation member 21a is operated, a failure occurs in RAS1 forming one system of the angle sensors in the accelerating operation member 21b, and that a failure mode includes short-circuiting.

Upon operation of the accelerating operation member 21a, the voltage values of LAS1, LAS2 take values in ranges of 0.6V<V(LAS1)≦4.2V, 0.3 <V(LAS2)≦2.1V. Since the accelerating operation member 21b remains inoperative, the voltage value of RAS2 is fixed at 0.3V and, since RAS1 is short circuited, the voltage value V(RAS1) exceeds 4.2V that is an upper limit. Sensor voltages of a total of four systems are inputted to the computer section 40, which discriminates the voltage to be outputted to the ECCS 41. In particular, the computer section 40 retrieves V(RAS2) =0.3V and discriminates that the accelerating operation member 21b remains inoperative. Also, in the presence of the voltage value V(RAS1) exceeding 4.2V that is the upper limit, the computer section 40 discriminates that an abnormality has occurred in the angle sensor of the accelerating operation member 21b. In addition, due to the presence of the voltage values of LAS1, LAS2 fluctuating in a given output range, the computer section 40 discriminates that the angle sensors of the accelerating operation member 21a remain in a normal status. It is considered that although no trouble occurs in respect of normal traveling through mere operation of the accelerating operation member 21a, a probability occurs for the driver to shift their grip on the accelerating operation member 21b whose angle sensor remains abnormal for some reason. In such a case, the computer section 40 transmits the output voltage V(AS1), formed of the abnormal voltage V(RAS1), and the output voltage V(AS2), formed of V(RAS2), to the ECCS 41. Upon receipt of these voltage values, the ECCS 41 discriminates that, due to presence of the output voltage V(AS1) exceeding 4.2V that forms the upper limit, there is an abnormality in the angle sensor, thereby providing the driver with information of the abnormal status using the engine warning lamp. However, the ECCS 41 retrieves the value of V(AS2) with no abnormal value being exhibited and operates to cause the throttle opening to be adjusted to a value as intended by the driver, thereby allowing traveling per se to be maintained. But, if the engine speed is nearing a vicinity of 25,000 rpm, fuel is cut off to prevent the vehicle from being rapidly accelerated.

According to the presently filed embodiment, in case of the occurrence of an abnormality in any of the angle sensors of the accelerating operation members 21a, 21b, minimal traveling is ensured while making it possible to call the driver's attention to the warning.

Eighthly, an explanation is made of an eighth embodiment related to a control method for a vehicle speed using the vehicular steering operation device. In the eighth embodiment, a description is made of the method of controlling the vehicle speed, in a case where, under a circumstance in which both of the accelerating operation members are operated, a failure occurs in one system of the angle sensors (potentiometers) in one of the accelerating operation members, with reference to FIG. 26. In particular, suppose a case in that, under the circumstance where the accelerating operation members 21a, 21b are operated, a failure occurs in RAS1 forming one system of the angle sensor in the accelerating operation member 21b, and that a failure mode includes short-circuiting.

Upon operation of the accelerating operation member 21a, the voltage values of LAS1, LAS2 take values in ranges of 0.6V<V(LAS1)≦4.2V, 0.3V<V(LAS2)≦ 2.1V, respectively. When operating the accelerating operation member 21b, the voltage value of RAS2 remains in a range of 0.3V<V(RAS2)≦2.1V. Since RAS1 is short-circuited, the voltage value V(RAS1) exceeds 4.2V that is the upper limit. Sensor voltages of the total of four systems are inputted to the computer section 40, which discriminates the voltage to be outputted to the ECCS 41. In particular, since the voltage value V(RAS1) exceeds 4.2V that is the upper limit, the computer section 40 discriminates that an abnormality has occurred in the angle sensor of the accelerating operation member 21b and that the angle sensor of the accelerating operation member 21a is normal. Then, the computer section 40 transmits the output voltage V(AS1) to the ECCS 41, formed of the voltage V(RAS1) indicative of occurrence of abnormality in the output voltage RAS1, while upon comparison between the voltage values between RAS2 and LAS2, transmitting the voltage value remaining at a lower value as the output voltage V(AS2) to the ECCS 41. Also, another selecting method includes allowing the voltage value, that has been previously received, to be outputted.

Thus, in a case of using both of the accelerating operation members, the voltage values of RAS1 and LAS1 and the voltage values of RAS2 and LAS2 are compared, respectively, whereupon if the abnormality is found, an abnormal signal is outputted whereas in the normal case, the selected voltage value is outputted to the ECCS 41.

While the presently filed embodiment has been described with reference to an example where the failure mode includes short-circuiting, the same principle as that of the presently filed embodiment may also be applied to other factors of the sensor failures such as open-circuiting, fixing and chattering.

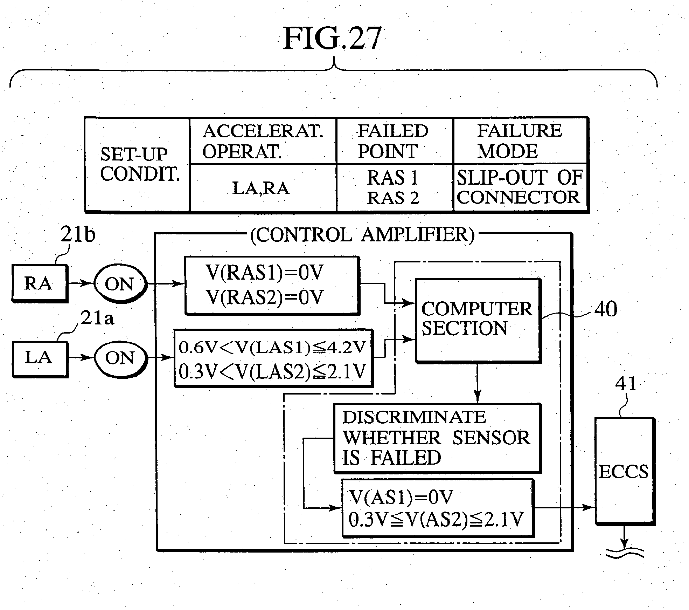

Ninthly, an explanation is made of a ninth embodiment related to a control method for a vehicle speed using the vehicular steering operation device. In the ninth embodiment, a description is made of the method of controlling the vehicle speed, in a case where under a circumstance in which both of the accelerating operation members are operated, disconnections or short-circuiting occurs in connectors of two systems of the angle sensors in one of the accelerating operation members, with reference to FIG 27. In particular, suppose a case in that, under the circumstance where the accelerating operation members 21a, 21b are operated, non-conductions occur in both of RAS1, RAS2 forming the angle sensors of the two systems in the accelerating operation member 21b, and that failure modes include slipping-off of the connectors.

Since both the connectors of the angle sensors of the two systems in the accelerating operation member 21b are slipped off, the voltage values of RAS1, RAS2 lie in 0V. Here, if the driver operates the accelerating operation member 21b, no acceleration occurs in the vehicle because of an ineffectiveness in accelerating operation.

Upon operation of the accelerating operation member 21a, the voltage values of LAS1, LAS2 take values in ranges of 0.6V<V(LAS1)≦4.2V and 0.3<V(LAS2)≦ 2.1V, respectively. The computer section 40 monitors the voltages of the total of four systems and discriminates that abnormalities occur in all the two systems of the angle sensors of the accelerating operation member 21b. Then, the computer section 40 transmits the output voltage V(AS1), formed of the voltage value resulting from the accelerating operation member 21b, and the output voltage V(AS2) formed of the voltage value resulting from the accelerating operation member 21a. Also, the outputs may be arbitrarily selected. In the presently filed embodiment, the voltages to be outputted to the ECCS 41 are contemplated to be formed of the voltage values of RAS1, LAS2.

With the output voltage V(AS1) taking the value of 0V, the ECCS 41 applied with these voltage values discriminates that an abnormality has occurred in the angle sensor and operates to provide the driver with information indicative of the abnormality by allowing the engine warning lamp to be lighted up. However, the ECCS 41 retrieves the value of the voltage value of V(AS2) to allow the throttle opening to be adjusted to a value intended by the driver, thereby allowing traveling per se to be maintained. But, if the engine speed is nearing a vicinity of 25,000 rpm, fuel is cut off. This results in an ability for the driver to physically sense the occurrence of some kind of abnormality and to avoid rapidly accelerating the vehicle. Also, here, although the explanation has been made of an example in respect of the connector's slip-off, the same control may be undertaken during occurrence of short-circuiting.

As previously described above, although the present invention has been described in conjunction with the example related to the above embodiment, no limitation is intended to this embodiment and the presently filed embodiment may take various forms without departing from the scope and spirit of the present invention. For instance, in place of the acceleration operation members 21a, 21b, even through the use of the acceleration levers 31a, 31b or the acceleration levers 37a, 37b, a similar control method can be executed.

## Claims

1. A vehicular steering operation device comprising:
a hub portion (11) mounted to a steering shaft;
a rim portion (12a, 12b) fixed to an outer periphery of the hub portion (11); and
a vehicle speed control member operatively disposed on a surface of at least one of vehicle front sides of the hub portion (11) and the rim portion (12a, 12b).

2. The vehicular steering operation device according to claim 1, wherein the surface, closer to the vehicle front side, of the rim portion (12a, 12b) has a concave portion (24a, 24b, 38a, 38b) to accommodate the vehicle control member.

3. The vehicular steering operation device according to claim 2, wherein the vehicle speed control member includes an accelerating operation member (21a, 21b) disposed for a sliding capability in a fore and aft direction of a vehicle to allow the accelerating operation member (21a, 21b) to slide in the aft direction of the vehicle, thereby controlling a traveling speed of the vehicle.

4. The vehicular steering operation device according to claim 3, further comprising:
an upper end support portion (22a, 22b) formed on the surface, closer to the vehicle front side, of the rim portion (12a, 12b); and
a lower end support portion (23a, 23b) formed on the surface, closer to the vehicle front side, of the rim portion (12a, 12b) in an area spaced from the upper end support portion (22a, 22b);
wherein the accelerating operation member (21a, 21b) is disposed between the upper and lower end support portions (22a, 22b, 23a, 23b) for a sliding capability in a radial direction of the rim portion (12a, 12b).

5. The vehicular steering operation device according to claim 1, wherein the vehicle speed control member includes an acceleration lever (31a, 31b) having an end portion pivotally supported to allow the acceleration lever (31a, 31b) to be pulled rearward in a vehicle, thereby controlling a traveling speed of the vehicle.

6. The vehicular steering operation device according to claim 5, wherein the acceleration lever (31a, 31b) is disposed along an axis of the rim portion (12a, 12b) and has a substantially V-shaped configuration bent toward the vehicle front side.

7. The vehicular steering operation device according to claim 2, wherein the vehicle speed control member includes an acceleration lever (37a, 37b) having an end portion pivotally supported to allow the acceleration lever (37a, 37b) to be pulled rearward in a vehicle, thereby controlling a traveling speed of the vehicle.

8. The vehicular steering operation device according to claim 7, wherein the acceleration lever (37a, 37b) is disposed along an axis of the rim portion (12a, 12b) and is of a gun-grip type.

9. The vehicular steering operation device according to claim 1, wherein an operation switch is disposed on at least one of the hub portion (11) and the rim portion (12a, 12b) at an area thereof to which, under a condition where the rim portion (12a, 12b) is gripped, a thumb can reach.

10. The vehicular steering operation device according to claim 9, wherein the operation switch includes at least a winker switch (13a, 13b).

11. A method of controlling a vehicle speed using a vehicular steering operation device, the method comprising the steps of:
detecting accelerator displacement values of a pair of vehicle speed control members (21a, 21b, 31a, 31b, 37a, 37b) located left and right of a steering operation device (10, 30), respectively;
selecting one, whose accelerator displacement value resulting for a given time interval has a less variation than that of the other, from the pair of vehicle speed control members (21a, 21b, 31a, 31b, 37a, 37b); and
adjusting a throttle opening in dependence upon an accelerator output value of the selected vehicle speed control member for controlling a traveling speed.

12. A method of controlling a vehicle speed using a vehicular steering operation device, the method comprising the steps of:
detecting operational displacement values of a pair of vehicle speed control members (21a, 21b, 31a, 31b, 37a, 37b) located left and right of a steering operation device (10,30), respectively;
selecting one, which is previously selected, from the pair of vehicle speed control members (21a, 21b, 31a, 31b, 37a, 37b); and
adjusting a throttle opening in dependence upon an accelerator output value of the selected vehicle speed control member for controlling a traveling speed.

13. A method of controlling a speed of a vehicle using a vehicular steering operation device by increasing a throttle opening through accelerating operation to increase a vehicle speed and braking a vehicle traveling through braking operation to decrease the vehicle speed, the method comprising:
when performing both the accelerating operation and the braking operation, closing the throttle valve and applying a brake to a traveling vehicle, thereby decreasing the vehicle speed.

14. A method of controlling a vehicle speed using a vehicular steering operation device, the method comprising the steps of:
measuring a variant amount in an accelerator displacement value appearing for a given time interval; and
adjusting a throttle opening, when the variant amount reaches a given value, in dependence upon another variant amount which is less than the current variant amount of the accelerator displacement value.

15. The method of controlling the vehicle speed using the vehicular steering operation device according to claim 14, wherein when the variant amount exceeds the given value and the accelerator displacement value increases, the throttle opening is kept at a constant value.
